# EUROPEAN PATENT APPLICATION

(11) **EP 4 265 335 A1**
(43) Date of publication of application: **25.10.2023**
(21) Application number: 22182314.9
(22) Date of filing: 30.06.2022
(51) Int. Cl.: B02C 18/00, B02C 18/06, B02C 18/18

(54) **GARBAGE DISPOSAL DEVICE**

(30) Priority: 21.04.2022 CN 202210420896
(71) Applicant: Ningbo Jiayin Electro Mechanical Technology Co., Ltd., Yuyao City, Zhejiang Province 315408 (CN)
(72) Inventor: Wang, Fangbing, Yuyao City, 315408 (CN); Xiong, Guanzheng, Yuyao City, 315408 (CN); Zhao, Jianjiang, Yuyao City, 315408 (CN)
(74) Representative: Petraz, Gilberto Luigi

(57) **Abstract**

The present invention provides a garbage disposal device. The garbage disposal device includes a driving mechanism (200) and a cutting mechanism (100) including an outer casing (120), a plurality of fixed cutting members (150), and a rotating cutting member (160). Both the plurality of fixed cutting members (150) and the rotating cutting member (160) are arranged in the outer casing (120). The driving mechanism (200) is connected to the rotating cutting member (160) and configured for driving the rotating cutting member (160). The plurality of fixed cutting members (150) are connected with the outer casing (120). The rotating cutting member (160) is rotatably matched with the plurality of fixed cutting members (150), and capable of cutting garbage in the outer casing (120) into particles. The outer casing (120) is capable of introducing the garbage into the garbage disposal device for cutting and discharging the garbage after a cutting treatment.

## Description

### TECHNICAL FIELD

The present invention relates to a field of garbage disposal, in particular to a garbage disposal device.

### BACKGROUND

A kitchen garbage disposal device is a modern and environmentally friendly household appliance, which is usually installed in a lower part of a kitchen sink and connected to a drain pipe. The kitchen garbage disposal device can process kitchen garbage into fine particles that can be discharged from the drain pipe along a water flow. When a general garbage disposal device deals with food garbage, a cutter disk of the garbage disposal device may be easily affected by the garbage having different textures and sizes and thus may malfunction, resulting in a poor garbage disposal effect.

### SUMMARY

According to various embodiments of the present invention, provided is a garbage disposal device having a stable structure, a high cutting efficiency and a convenient application. The garbage disposal device includes a driving mechanism; and a cutting mechanism including an outer casing, a plurality of fixed cutting members, and a rotating cutting member.

In an embodiment, both the plurality of fixed cutting members and the rotating cutting member are arranged in the outer casing. The driving mechanism is connected to the rotating cutting member and configured for driving the rotating cutting member. The plurality of fixed cutting members are connected with the outer casing, and capable of cutting garbage in the outer casing into particles, and the outer casing is capable of introducing the garbage into the garbage disposal device for cutting and discharging the garbage after a cutting treatment.

In an embodiment, the cutting mechanism further includes an inner cylinder, which is arranged in the outer casing connected with the outer casing, and communicated with both ends of the outer casing. The plurality of fixed cutting members are arranged in the inner cylinder and connected with an inner side surface of the inner cylinder.

In an embodiment, the plurality of fixed cutting members includes at least two first cutting tooth portions, which have a cross section in a shape of triangle, trapezoid or rectangle. The at least two first cutting tooth portions are arranged on a side close to the rotating cutting member of the plurality of fixed cutting members. The at least two first cutting tooth portions are parallel to a circumferential direction of the inner cylinder and uniformly arranged along an axis of the inner cylinder on the plurality of fixed cutting members.

In an embodiment, the rotating cutting member includes a first cutter, a second cutter, and a rotating shaft. Both the first cutter and the second cutter are connected with the rotating shaft, and the first cutter and the second cutter are evenly disposed at intervals. The second cutter is in a shape of spiral. The first cutter includes a second cutting tooth portion, and a cross section of the second cutting tooth portion is in a shape of triangle, trapezoid, or rectangle. The second cutting tooth is arranged on a side close to the plurality of fixed cutting members of the first cutter. At least two of the second cutting tooth portions are parallel to the circumferential direction of the inner cylinder and uniformly arranged on the first cutter along the axial direction of the inner cylinder. The first cutter is meshed with the at least two first cutting tooth portions of the fixed cutting members via the second cutting tooth portion.

In an embodiment, the fixed cutting members further includes first connecting portion which is arranged on a side away from the rotating cutting member of the plurality of fixed cutting members. The inner cylinder includes at least one mounting groove, and the first connecting portion is connected with the at least one mounting groove.

In an embodiment, the rotating cutting member further includes a connecting key, which is connected with the rotating shaft, and the rotating cutting member is connected with the output shaft of the driving mechanism via the connecting key.

In an embodiment, the rotating cutting member further includes a fixing element, which is arranged at an end away from the driving mechanism of the rotating shaft, connected with the driving mechanism, and configured for fixing the rotating shaft.

In an embodiment, the connecting part of the cutting member is a dovetail tenon, and the at least one mounting grooves are a mortises matched with the dovetail tenon.

In an embodiment, the cutting mechanism further includes a first feeding port. The first feeding port includes a tapered-shaped guiding portion, and a small end of the guiding portion is connected to an end away from the driving mechanism of the outer housing.

In an embodiment, the first feeding port further includes a second connecting portion connected with an end of the outer casing away from the driving mechanism. The small end of the guiding portion is connected with the second connecting portion. The guiding portion and the second connecting portion are in communication with each other.

In an embodiment, the outer casing includes a second feeding port and a discharge port. The second feeding port and the discharge port are arranged on an outer surface of the outer casing and communicated with the outer casing. The second feeding port is opposite to the discharging port, and the second feeding port is arranged on a side away from the driving mechanism of the outer surface of the outer casing. The second feeding port is capable of connecting to a dishwasher. The discharging port is arranged on a side close to the driving mechanism of the outer surface of the outer casing, and is capable of connecting to a pipe.

In an embodiment, the cutting mechanism further includes a sieve plate which is provided with sieve holes. The inner cylinder further includes a mounting hole of a sieve plate which is arranged on the same side with the discharge port of the inner cylinder and communicated with the discharge port. The sieve plate is matched with the mounting hole of the sieve plate and located on the inner cylinder.

In an embodiment, the cutting mechanism further includes a sealing member. The inner cylinder further includes a connecting hole through which the output shaft of the driving mechanism extends. The sealing member is connected with the output shaft of the driving mechanism, and the sealing member abuts against the connecting hole and is capable of sealing the connecting hole of the inner cylinder.

According to the above garbage disposal device, the garbage may be cut into particles by the rotation and cooperation of the rotating cutting member with the fixed cutting members, thus ensuring a cutting effect. In addition, the garbage may be introduced into the garbage disposal device for cutting via the outer casing, and the garbage after a cutting treatment may be discharged from the garbage disposal device via the outer casing. Therefore, the garbage disposal device of the present invention may have a simple overall structure and thus it is convenient for installation and application. In addition, because the fixed cutting members are disposed in plural, when dealing with large and hard garbage, the rotating cutting member may cooperate with the plurality of fixed cutting members to repeatedly cut the garbage, which reduces a cutting force of blades of the fixed cutting members while ensuring an effective cutting. Therefore, malfunction of a cutter due to an overloading or a serious wear and tear during cutting large and hard garbage may be avoided, thus improving a cutting efficiency and prolonging a service life of the cutter. Accordingly, the above garbage disposal device may have a simple structure, a high cutting efficiency, and a good reliability.

### BRIEF DESCRIPTION OF THE DRAWINGS

FIG. 1 is an overall structural schematic diagram of a garbage disposal device in an embodiment of the present invention.
FIG. 2 is an exploded structural schematic diagram of a garbage disposal device in an embodiment of the present invention.
FIG. 3 is an exploded structural schematic diagram of a partial enlarged garbage disposal device in an embodiment of the present invention.
FIG. 4 is a schematic diagram of a sieve plate of the present invention.

Descriptions of reference numerals in the drawings are as follows.

100 represents a cutting mechanism; 200 represents a driving mechanism; 110 represents a first feeding port; 120 represents an outer casing; 130 represents a sieve plate; 131 represents a sieve hole; 140 represents an inner cylinder; 150 represents a fixed cutting member; 160 represents a rotating cutting member; 170 represents a sealing member; 210 represents an output shaft; 111 represents a guiding portion; 112 represents a second connecting portion; 121 represents a second feeding port; 122 represents a discharge port; 141 represents a mounting hole of a sieve plate; 142 represents a mounting groove; 143 represents a connecting hole; 151 represents a first cutting tooth portion; 152 represents a first connecting portion; 161 represents a first cutter; 1611 represents a second cutting tooth portion; 162 represents a second cutter; 163 represents a rotating shaft; 164 represents a fixing element; and 165 represents a connecting key.

### DETAILED DESCRIPTION

In order to make the above objects, features and advantages of the present invention more clearly understood, specific embodiments of the present invention will be described in detail below with reference to the accompanying drawings. In the following description, many specific details are set forth in order to provide a thorough understanding of the present invention.

In the description of the present invention, it should be understood that an orientation or a positional relationship indicated by terms such as "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial direction", "radial direction", and "circumferential direction", is based on the orientation or the positional relationship shown in the accompanying drawings, which is merely for ease of describing the present invention and to simplify the description, rather than indicating or implying that a referred device or element must have a particular orientation, be constructed and operated in a particular orientation. Therefore, the orientation or the positional relationship indicated by the above terms should not be construed as a limitation of the present invention.

In addition, terms "first" and "second" are merely used for descriptive purposes, and should not be construed as indicating or implying relative importance or implicitly specifying the number of referred technical features. Thus, features defined with "first", "second" may expressly or implicitly include at least one of these features. In the description of the present invention, "a plurality of' means at least two, for example, two, three, etc., unless otherwise expressly and specifically defined.

In the present invention, unless otherwise expressly and specifically defined, terms such as "install", "connected with", "connect", "fix" should be understood in a broad sense, for example, they may refer to a fixed connection, a detachable connection, or an integral body, or they may refer to a mechanical connection or an electrical connection. In addition, they may refer to a direct connection or an indirect connection by an intermediate medium, or they may refer to an internal communication between two elements or an interaction relationship between the two elements, unless otherwise expressly defined. For one of ordinary skill in the art, specific meanings of the above terms in the present invention may be understood according to specific situations.

In the present invention, unless otherwise expressly and specifically defined, a first feature being "on" or "under" a second feature may refer to a direct contact between the first feature and the second feature, or an indirect contact between the first feature and the second feature by an intermediate medium. Also, the first feature being "over", "above", or "on" the second feature may refer to that the first feature is directly above or obliquely above the second feature, or may simply refer to that the first feature has a higher level than that of the second feature. The first feature being "beneath", "below" and "under" the second feature may refer to that the first feature is directly below or obliquely below the second feature, or may simply refer to that the first feature has a lower level than that of the second feature.

It should be noted that when an element is referred to as being "fixed" or "disposed" on another element, it may be directly on the other element or an intervening element may be presented. When an element is considered to be "connected" to another element, it may be directly connected to the other element or an intervening element may be presented. As used herein, terms "vertical", "horizontal", "upper", "lower", "left", "right" and similar expressions are for the purpose of illustration only and do not represent the only embodiment.

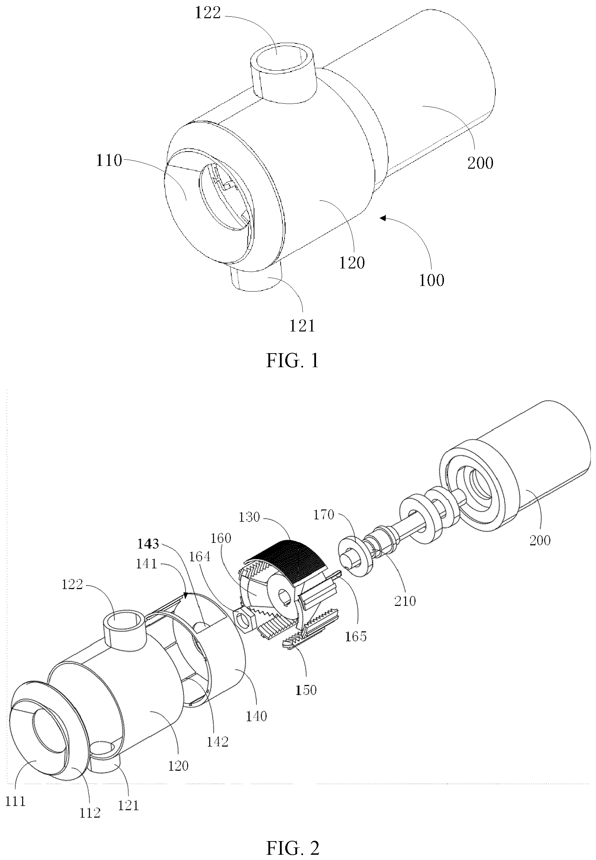

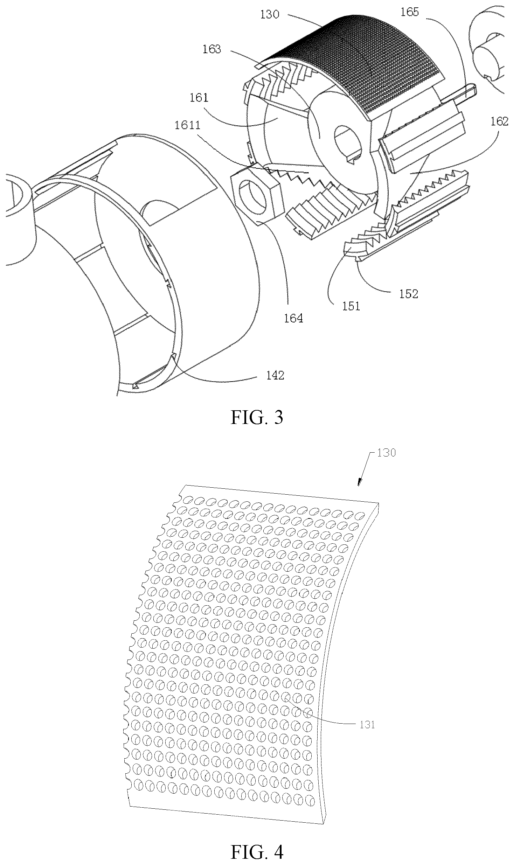

Referring to FIG. 1 to FIG. 3, FIG. 1 shows an overall structural schematic diagram of a garbage disposal device in an embodiment of the present invention, FIG. 2 shows an exploded structural schematic diagram of a garbage disposal device in an embodiment of the present invention, and FIG. 3 shows an exploded structural schematic diagram of a partial enlarged garbage disposal device in an embodiment of the present invention. FIG. 4 is a schematic diagram of a sieve plate. An embodiment of the present invention provides a garbage disposal device which includes a driving mechanism 200 and a cutting mechanism 100. The cutting mechanism 100 includes an outer casing 120, a plurality of fixed cutting members 150, and a rotating cutting member 160. Both the plurality of fixed cutting members 150 and the rotating cutting member 160 are arranged in the outer casing 120. The driving mechanism 200 is connected to rotating cutting member 160 and configured for driving the rotating cutting member 160. The plurality of fixed cutting members 150 are connected with the outer casing 120. The rotating cutting member 160 is rotatably matched with the plurality of fixed cutting members 150, and capable of cutting garbage in the outer casing 120 into particles. In addition, the outer casing 120 is capable of introducing the garbage into the garbage disposal device for cutting and discharging the garbage after a cutting treatment. According to the above garbage disposal device, the garbage may be cut into particles by rotation and cooperation of the rotating cutting member 160 with the plurality of fixed cutting members 150, thus ensuring a cutting effect. In addition, the garbage may be introduced into the garbage disposal device for cutting by the outer casing 120, and the garbage after a cutting treatment may be discharged from the garbage disposal device by the outer casing 120. Therefore, the garbage disposal device of the present invention may have a simple overall structure and thus it is convenient for installation and application. Because the fixed cutting members 150 are disposed in plural, when dealing with large and hard garbage, the rotating cutting member 160 may cooperate with the plurality of fixed cutting members 150 to repeatedly cut the garbage, which reduces a cutting force of blades of the plurality of fixed cutting members 150 while ensuring an effective cutting. Accordingly, malfunction of a cutter due to an overloading or a serious wear and tear during cutting the large and hard garbage may be avoided, thus improving a cutting efficiency and a service life of the cutter. Therefore, the above garbage disposal device may have a simple structure, a high cutting efficiency, and a good reliability.

In an embodiment, the plurality of fixed cutting members 150 may be disposed parallel to an axial direction of the outer casing 120 to increase a matching surface between the plurality of fixed cutting member 150 and the rotating cutting member 160, thereby increasing an effective cutting area and ensuring a dicing effect.

In an embodiment, a number of the plurality of fixed cutting members 150 may be at least two. Specifically, the number of the plurality of fixed cutting members 150 may be 2, 3, 4, 5, or 6. As such, it is possible to ensure a rational use of space and reduce a size and a weight of the garbage disposal device while improving the cutting efficiency of the garbage disposal device.

In an embodiment, the driving mechanism 200 may be a motor, and an output shaft 210 of the motor may be connected to the rotating cutting member 160.

In order to improve a structure of the garbage disposal device to facilitate cleaning, maintenance, or disassembly of the garbage disposal device, in an embodiment, the cutting mechanism 100 may further include an inner cylinder 140, which is arranged in and connected with the outer casing 120, and communicated with both ends of the outer casing 120. In addition, the plurality of fixed cutting members 150 are arranged in the inner cylinder 140 and connected with an inner side surface of the inner cylinder 140. By installing the plurality of fixed cutting members 150 in the inner cylindrical 140 and then installing the inner cylindrical 140 in the outer casing 120, a connection between the plurality of fixed cutting members 150 and the outer casing 120 may be realized. In an embodiment, the inner cylinder 140 may be made of stainless steel to improve a service life thereof.

In order to improve a cutting quality and a cutting efficiency, in an embodiment, the plurality of fixed cutting members 150 include at least two first cutting tooth portions 151, which have a cross section in a shape of triangular, trapezoidal or rectangular. The at least two first cutting tooth portions 151 are arranged on a side close to the rotating cutting member 160 of the plurality of fixed cutting members 150. The at least two first cutting tooth portions 151 are parallel to a circumferential direction of the inner cylinder 140 and uniformly arranged along an axial direction of the inner cylinder 140 on the plurality of fixed cutting members 150. When cutting the garbage, the driving mechanism 200 may drive the rotating cutting member 160 to rotate. Meanwhile, when the rotating cutting member 160 rotates to positions where the plurality of fixed cutting members 150 are located, the garbage may be cut by meshing of the rotating cutting member 160 with the first cutting tooth portions 151 of the plurality of fixed cutting members 150. Because the first cutting tooth portions 151 are parallel to the circumferential direction of the inner cylinder 140 and uniformly arranged along the axial direction of the inner cylinder 140 on the plurality of fixed cutting members 150, an effective cutting area may be increased, and a stable cutting frequency may be ensured.

In order to further improve a cutting quality and a cutting efficiency, in an embodiment, the rotating cutting member 160 may include a first cutter 161, a second cutter 162, and a rotating shaft 163. Both the first cutter 161 and the second cutter 162 may be connected with the rotating shaft 163, and the first cutter 161 and the second cutter 162 may be evenly disposed at intervals. The second cutter 162 may be in a shape of a spiral. The first cutter 161 may include a second cutting tooth portion 1611, and a cross section of the second cutting tooth portion 1611 is in a shape of triangle, trapezoid, or rectangle. The second cutting tooth portion 1611 may be arranged on a side close to the plurality of fixed cutting members 150 of the first cutter 161. In addition, at least two of the second cutting tooth portions 1611 may be parallel to the circumferential direction of the inner cylinder 140 and uniformly arranged on the first cutter 161 along the axial direction of the inner cylinder 140. Since the first cutter 161 is meshed with the first cutting tooth portions 151 of the plurality of fixed cutting members 150 via the second cutting tooth portions 1611, the garbage may be cut into particles. In addition, by a cooperation of the spiral second cutter 162 with the plurality of fixed cutting members 150, the effective cutting area may be increased, and at the same time, the garbage in the inner cylinder 140 can be continuously guided to into a meshing gap between the first cutter 161 and the plurality of fixed cutting members 150, thus improving the cutting efficiency and cutting quality. In an embodiment, the second cutter 162 is provided with a smooth blade without cutting tooth portions, which may simplify a structure of the second cutter 162, and at the same time may enhance a structural strength of the second cutter 162. Therefore, it is beneficial for cutting large and hard garbage. In addition, the second cutter 162 may rotate to assist in feeding the garbage into the first cutter 161 for cutting while cutting the garbage by a cooperation of the smooth blade of the second cutter 162 with the plurality of fixed cutting members 150. Therefore, it is convenient to accommodate large and hard garbage. Moreover, when cutting the garbage, larger particles may be cut firstly, and then further cut by the first cutter 161, thus improving the cutting quality and cutting efficiency.

In order to facilitate an installation of the plurality of fixed cutting members 150 and simplify an overall structure, in an embodiment, the plurality of fixed cutting members 150 may further include a first connecting portion 152 which is arranged on a side away from the rotating cutting member 160 of the plurality of fixed cutting members 150. In addition, the inner cylinder 140 may include at least one mounting groove 142. The first connecting portion 152 may be connected with the mounting groove 142. Therefore, the garbage disposal device of the present invention may have a simple structure, and thus it is convenient for installation and application.

In order to ensure a stable transmission of a torque of the rotating cutting member 160, in an embodiment, the rotating cutting member 160 may further include a connecting key 165 which is connected with the rotating shaft 163. In addition, the rotating cutting member 160 may be connected with the output shaft 210 of the driving mechanism 200 via the connecting key 165.

In order to ensure that the rotating cutting member 160 maintains fixed without moving during an operation, the rotating cutting member 160 may further include a fixing element 164, which is arranged at an end away from the driving mechanism 200 of the rotating shaft 163, connected with the driving mechanism 200, and configured for fixing the rotating shaft 163.

In order to further simplify a structure and ensure a stable connection of the plurality of fixed cutting members 150, in an embodiment, the first connecting portion 152 may be a dovetail tenon, and the mounting groove 142 may be a mortise matched with the dovetail tenon.

In an embodiment, the cutting mechanism 100 may further include a first feeding port 110 including a tapered-shaped guiding portion 111. A small end of the guiding portion 111 is connected to an end away from the driving mechanism 200 of the outer casing 120. During use, the first feeding port 110 may be connected to a water tank, and the garbage in the water tank may be guided into the outer casing 120 via the guiding portion 111. Because the inner cylinder 140 is in communication with both ends of the outer casing 120, the garbage entering the outer casing 120 from the first feeding port 110 may enter the inner cylinder 140 for cutting.

In order to facilitate an installation of the first feeding port 110, in an embodiment, the first feeding port 110 may further include a second connecting portion 112 which is connected with an end of the outer casing 120 away from the driving mechanism 200. The small end of the guiding portion 111 is connected with the second connecting portion 112, and the guiding portion 111 and the second connecting portion 112 are in communication with each other.

In an embodiment, the outer casing 120 may include a second feeding port 121 and a discharge port 122. The second feeding port 121 and the discharge port 122 may be arranged on an outer surface of the outer casing 120 and communicated with the outer casing 120. The second feeding port 121 may be opposite to the discharging port 122, and the second feeding port 121 may be arranged on a side away from the driving mechanism 200 of the outer surface of the outer casing 120. In addition, the second feeding port 121 is capable of connecting to a dishwasher, and the discharging port 122 is arranged on a side close to the driving mechanism 200 of the outer surface of the outer casing 120, and is capable of being connected to a pipe. Because the second feeding port 121 is convenient to connect to the dishwasher, garbage collected by the dishwasher may enter the outer casing 120 and the inner cylinder 140 for a cutting treatment via the second feeding port 121, and the garbage after the cutting treatment may be discharged via the discharge port 122, thus improving an utilization rate of the garbage disposal device. Accordingly, the entire garbage disposal device may feed simultaneously from the first feeding port 110 and the second feeding port 121, thereby improving efficiency.

In order to further ensure the cutting quality, in an embodiment, the cutting mechanism 100 may further include a sieve plate 130 which is provided with sieve holes 131. The inner cylinder 140 may further include a mounting hole 141 of the sieve plate which is arranged on the same side as the discharge port 122 and communicated with the discharge port 122. The sieve plate 130 may be matched with the mounting hole 141 of the sieve plate and located on the inner cylinder 140. Garbage particles with insufficient cutting completion may be filtered in the inner cylinder 140 by the sieve plate 130 for further cutting until they are cut into particles that are suitable for sizes of the sieve holes 131, and then discharged from the discharge port 122. As such, the cutting quality of the garbage disposal device may be ensured, and at the same time, a blockage of the discharge port 122 or a blockage of a connecting pipe at the discharge port 122 may be avoided. Therefore, a failure rate may be reduced and a reliability of the garbage disposal device may be improved.

In an embodiment, the cutting mechanism 100 may further include a sealing member 170. The inner cylinder 140 may further include a connecting hole 143 through which the output shaft 210 of the driving mechanism 200 may extend. The sealing member 170 is connected with the output shaft 210 of the driving mechanism 200, abuts against and is capable of sealing the connecting hole 143 of the inner cylinder 140, thereby avoiding an influence on an operation of the driving mechanism 200 due to a leakage of the garbage particles and liquid in the inner cylinder 140.

According to the above garbage disposal device, the garbage may be cut into particles by the rotation and the cooperation of the rotating cutting member 160 with the plurality of fixed cutting members 150, thus ensuring a cutting effect. In addition, the garbage may be introduced into the garbage disposal device for cutting via the outer casing 120, and the garbage after a cutting treatment may be discharged from the garbage disposal device via the outer casing 120. Therefore, the garbage disposal device of the present invention may have a simple overall structure and thus it is convenient for installation and application. In addition, because the fixed cutting members 150 are disposed in plural, when dealing with large and hard garbage, the rotating cutting member 160 may cooperate with the plurality of fixed cutting members 150 to repeatedly cut the garbage, which reduces a cutting force of the blades of the plurality of fixed cutting members 150 while ensuring an effective cutting. Therefore, malfunction of a cutter due to an overloading or a serious wear and tear during cutting large and hard garbage may be avoided, thus improving a cutting efficiency and a service life of the cutter. In addition, the garbage may be cut by rotation of the rotating cutting member 160 for several times until the garbage is cut into particles as required, thus ensuring the cutting quality of the garbage disposal device. Therefore, the above garbage disposal device may have a simple structure, a high cutting efficiency, and a good reliability.

The technical features of the above-described embodiments may be combined in any combination. For the sake of brevity of description, all possible combinations of the technical features in the above embodiments are not described. However, as long as there is no contradiction between the combinations of these technical features, all should be considered as within the scope of this invention as defined in the claims.

## Claims

1. A garbage disposal device comprising:
a driving mechanism (200); and
a cutting mechanism (100) comprising an outer casing (120), a plurality of fixed cutting members (150), and a rotating cutting member (160),
wherein both the plurality of fixed cutting members (150) and the rotating cutting member (160) are arranged in the outer casing (120),
the driving mechanism (200) is connected to the rotating cutting member (160) and configured for driving the rotating cutting member (160),
the plurality of fixed cutting members (150) are connected with the outer casing (120), and
the rotating cutting member (160) is rotatably matched with the plurality of fixed cutting members (150), and capable of cutting garbage in the outer casing (120) into particles, and the outer casing (120) is capable of introducing the garbage into the garbage disposal device for cutting and discharging the garbage after a cutting treatment.

2. The garbage disposal device of claim 1, wherein the cutting mechanism (100) further comprises an inner cylinder (140), which is arranged in and connected with the outer casing (120), and communicated with both ends of the outer casing (120), and
wherein the plurality of fixed cutting members (150) are arranged in the inner cylinder (140) and connected with an inner side surface of the inner cylinder (140).

3. The garbage disposal device of claim 2, wherein the plurality of fixed cutting members (150) comprises at least two first cutting tooth portions (151), which have a cross section in a shape of triangle, trapezoid or rectangle,
wherein the at least two first cutting tooth portions (151) are arranged on a side close to the rotating cutting member (160) of the plurality of fixed cutting members (150),
the at least two first cutting tooth portions (151) are parallel to a circumferential direction of the inner cylinder (140) and uniformly arranged along an axis of the inner cylinder (140) on the plurality of fixed cutting members (150).

4. The garbage disposal device of claim 3, wherein the rotating cutting member (160) comprises a first cutter (161), a second cutter (162), and a rotating shaft (163),
wherein both the first cutter (161) and the second cutter (162) are connected with the rotating shaft (163), and the first cutter (161) and the second cutter (162) are evenly disposed at intervals,
the second cutter (162) is in a shape of spiral, the first cutter (161) comprises a second cutting tooth portion (1611), a cross section of the second cutting tooth portion (1611) is in a shape of triangle, trapezoid, or rectangle, the second cutting tooth is arranged on a side close to the plurality of fixed cutting members (150) of the first cutter (161).

5. The garbage disposal device of claim 4, wherein the first cutter (161) comprises at least two second cutting tooth portions (1611), and the at least two second cutting tooth portions (1611) are parallel to the circumferential direction of the inner cylinder (140) and uniformly arranged on the first cutter (161) along the axial direction of the inner cylinder (140), and the first cutter (161) is meshed with the at least two first cutting tooth portions (151) of the fixed cutting members (150) via the second cutting tooth portion.

6. The garbage disposal device of claim 3, wherein each of the plurality of fixed cutting members (150) further comprises a first connecting portion (152) which is arranged on a side away from the rotating cutting member (160) of the plurality of fixed cutting members (150), the inner cylinder (140) comprises at least one mounting groove (142), and the first connecting portion (152) is connected with the at least one mounting groove (142).

7. The garbage disposal device of claim 4, wherein the rotating cutting member further comprises a connecting key (165), which is connected with the rotating shaft (163), and the rotating cutting member is connected with an output shaft (210) of the driving mechanism via the connecting key (165).

8. The garbage disposal device of claim 4, wherein the rotating cutting member further comprises a fixing element (164), which is arranged at an end away from the driving mechanism (200) of the rotating shaft (163), connected with the driving mechanism (200), and configured for fixing the rotating shaft (163).

9. The garbage disposal device of claim 6, wherein the first connecting portion (152) is a dovetail tenon, and the at least one mounting grooves (142) are mortises matched with the dovetail tenon.

10. The garbage disposal device of any one of claims 1 to 9, wherein the cutting mechanism (100) further comprises a first feeding port (110),
wherein the first feeding port (110) comprises a tapered-shaped guiding portion (111), and a small end of the guiding portion (111) is connected to an end away from the driving mechanism (200) of the outer casing (120).

11. The garbage disposal device of claim 10, wherein the first feeding port (110) further comprises a second connecting portion (112) connected with an end of the outer casing (120) away from the driving mechanism (200), the small end of the guiding portion (111) is connected with the second connecting portion (112), and the guiding portion (111) and the second connecting portion (112) are in communication with each other.

12. The garbage disposal device of any one of claims 2 to 9, wherein the outer casing (120) comprises a second feeding port (121) and a discharge port (122),
the second feeding port (121) and the discharge port (122) are arranged on an outer surface of the outer casing (120) and communicated with the outer casing (120),
the second feeding port (121) is opposite to the discharging port, and the second feeding port (121) is arranged on a side away from the driving mechanism (200) of the outer surface of the outer casing (120),
the second feeding port (121) is capable of connecting to a dishwasher, the discharging port is arranged on a side close to the driving mechanism (200) of the outer surface of the outer casing (120), and is capable of connecting to a pipe.

13. The garbage disposal device of claim 12, wherein the cutting mechanism (100) further comprises a sieve plate (130) which is provided with sieve holes (131), and
wherein the inner cylinder (140) further comprises a mounting hole (141) of the sieve plate, which is arranged on the same side with the discharge port (122) of the inner cylinder and communicated with the discharge port (122), and the sieve plate (130) is matched with the mounting hole (141) of the sieve plate and located on the inner cylinder (140).

14. The garbage disposal device of any one of claims 7 to 9, wherein the cutting mechanism (100) further comprises a sealing member (170),
the inner cylinder (140) further comprises a connecting hole (143) through which the output shaft (210) of the driving mechanism extends, and
the sealing member (170) is connected with the output shaft (210) of the driving mechanism, and the sealing member (170) abuts against the connecting hole (143) and is capable of sealing the connecting hole (143) of the inner cylinder.
